# FASCICULE DE BREVET EUROPEEN

(11) **EP 2 219 908 B1**
(45) Date de publication et mention de la délivrance du brevet: **04.07.2012**
(21) Numéro de dépôt: 08774145.0
(22) Date de dépôt: 19.06.2008
(51) Int. Cl.: B60S 1/04

(54) **DISPOSITIF DE MAINTIEN POUR BALAI D'ESSUIE-GLACE**
HALTEVORRICHTUNG FÜR SCHEIBENWISCHERBLATT
WINDSCREEN WIPER BLADE RETENTION DEVICE

(30) Priorité: 28.06.2007 FR 0704651
(43) Date de publication de la demande: 25.08.2010
(73) Titulaire: Valeo Systèmes d'Essuyage, 78321 La Verrière (FR)
(72) Inventeur: JEHANNET, Jean-Pierre, F-27200 Vernon (FR); COLAS, Jean-Michel, F-63500 Issoire (FR)
(74) Mandataire: Rosolen-Delarue, Katell
(86) Numéro de dépôt international: PCT/EP2008/057777
(87) Numéro de publication internationale: WO 2009/000739

(56) Documents cités:
- WO-A-2006/080940
- WO-A-2007/122218
- FR-A- 2 843 368
- US-B1- 6 779 661

## Description

La présente invention concerne un dispositif permettant de maintenir la lame d'un balai d'essuie-glace dans une position sensiblement rectiligne.

L'invention trouve une application particulièrement avantageuse, mais non exclusive, dans le domaine des balais d'essuie-glace plats communément désignés par l'anglicisme "flat blades".

Par rapport aux balais droits encore largement utilisés à l'heure d'aujourd'hui, un balai plat présente la particularité d'être dépourvu de structure à palonniers. Cette nouvelle catégorie de balai d'essuie-glace dispose toujours d'une lame d'essuyage souple, mais l'armature externe chargée de la supporter est ici remplacée par une structure flexible qui est directement intégrée à ladite lame.

L'ensemble est habituellement agencé de manière à ce qu'une fois au contact d'une surface à essuyer, la pression exercée par le balai soit sensiblement constante en tout point de la lame d'essuyage. Un tel résultat est traditionnellement obtenu en adoptant une structure flexible qui au repos confère une forte courbure à la lame, mais qui à l'usage est à même de se déformer élastiquement afin que ladite lame épouse au mieux la surface à essuyer.

Quoi qu'il en soit, il est un fait que les balais plats présentent au repos une forme générale extrêmement cintrée. Ces derniers s'avèrent par conséquent particulièrement encombrants notamment dès lors qu'il s'agit de les stocker, de les transporter ou de les conditionner en vue de les vendre.

Pour remédier à cette difficulté, on a généralement recours à un dispositif de maintien dont le fonction est d'immobiliser la lame d'essuyage dans une forme redressée qui, idéalement, est sensiblement rectiligne.

Un tel dispositif est, par exemple, présenté dans le document US 6 779 661 B1.

Parmi les dispositifs de maintien connus de l'état de la technique, il en est un qui se présente sous la forme d'un profilé droit en plastique, dont la section en U délimite un logement voué à recevoir la lame du balai. Le redressement de la lame est obtenu en venant plaquer la structure flexible du balai plat contre les bords longitudinaux du profilé droit, et en solidarisant le tout ensemble à l'aide de clips jouant le rôle de moyens de verrouillage réversibles.

Il est important de souligner que si un tel profilé droit est réalisé en plastique, c'est essentiellement pour des raisons de coût. Un dispositif de maintien étant par définition un élément jetable, puisqu'il n'est destiné à être utilisé que pour le conditionnement du balai, il se doit impérativement d'être bon marché.

Ce type de dispositif de maintien ne donne cependant pas entière satisfaction à l'usage, du fait qu'il présente une stabilité mécanique qui n'est constante au cours du temps. La rigidité intrinsèque des plastiques à bas coût du marché s'avère en effet insuffisante pour s'opposer efficacement aux forces de rappel qui sont générées par la structure flexible du balai, lorsque cette dernière est mise en contrainte dans le dispositif de maintien. Le profilé plastique va par conséquent solidarisant le tout ensemble à l'aide de clips jouant le rôle de moyens de verrouillage réversibles.

Il est important de souligner que si un tel profilé droit est réalisé en plastique, c'est essentiellement pour des raisons de coût. Un dispositif de maintien étant par définition un élément jetable, puisqu'il n'est destiné à être utilisé que pour le conditionnement du balai, il se doit impérativement d'être bon marché.

Ce type de dispositif de maintien ne donne cependant pas entière satisfaction à l'usage, du fait qu'il présente une stabilité mécanique qui n'est constante au cours du temps. La rigidité intrinsèque des plastiques à bas coût du marché s'avère en effet insuffisante pour s'opposer efficacement aux forces de rappel qui sont générées par la structure flexible du balai, lorsque cette dernière est mise en contrainte dans le dispositif de maintien. Le profilé plastique va par conséquent avoir tendance à se déformer progressivement au cours du temps, de sorte qu'il va ne plus être en mesure de garantir durablement la rectitude de la lame d'essuyage, et donc une compacité constante au balai d'essuie-glace.

Il est à noter que pour des raisons d'encombrement et de coût, il n'apparaît pas pertinent d'envisager un surdimensionnement du dispositif de maintien pour en augmenter la tenue mécanique. L'utilisation d'un matériau plus rigide est également à exclure puisque, comme évoqué précédemment, cela impliquerait un surcoût tout à fait incompatible avec le caractère jetable du dispositif de maintien.

Aussi, le problème technique à résoudre par l'objet de la présente invention, est de proposer un dispositif de maintien pour un balai d'essuie-glace comprenant une lame d'essuyage supportée par une structure flexible, ledit dispositif étant destiné à immobiliser la lame d'essuyage dans une forme sensiblement rectiligne, dispositif de maintien qui permettrait d'éviter les problèmes de l'état de la technique en offrant notamment une efficacité durable, tout en demeurant peu onéreux.

La solution au problème technique posé consiste, selon la présente invention, en ce que le dispositif de maintien comporte au moins une surface d'appui concave qui est apte à coopérer par contact avec la partie inférieure de la structure flexible, ainsi que des moyens de verrouillage aptes à plaquer au moins ponctuellement la structure flexible contre chaque surface d'appui concave.

L'invention telle qu'ainsi définie présente l'avantage de palier le manque de rigidité intrinsèque du dispositif de maintien, en anticipant en quelque sorte le futur fléchissement dont ledit dispositif va inéluctablement faire l'objet dès lors qu'il va être couplé à un balai d'essuie-glace fortement précontraint.

Pour cela, l'invention prévoit d'immobiliser le balai sur le dispositif de maintien, dans une position telle que la lame d'essuyage présente initialement une forme légèrement convexe. Ce redressement excessif de la lame, en ce sens qu'il va au-delà de la rectitude visée par les dispositifs de maintien de l'état de la technique, va alors pouvoir compenser le fléchissement inéluctable du dispositif de maintien au fur et à mesure qu'il va être généré par le balai, suite à la mise en contrainte de la structure flexible.

L'objectif de l'invention est qu'à long terme, la lame d'essuyage ne puisse jamais adopter une forme concave trop prononcée, et qu'idéalement elle présente une forme sensiblement rectiligne. Il est alors possible de garantir dans le temps un encombrement réduit au balai d'essuie-glace, sans pour autant devoir recourir à un dispositif de maintien surdimensionné ou réalisé dans un matériau onéreux.

C'est la concavité de chaque surface d'appui, combinée à l'action bloquante des moyens de verrouillage, qui permet au départ d'inverser la courbure naturelle de la lame d'essuyage, et plus précisément d'obliger cette dernière à prendre une forme légèrement cintrée et convexe.

A cet égard, il est à noter que d'un dispositif de maintien à l'autre, la courbure des surfaces d'appui concaves pourra varier en fonction de la rigidité effective et des dimensions du dispositif de maintien considéré, et/ou de la flexibilité intrinsèque et des dimensions du balai d'essuie-glace auquel il est associé. Mais bien évidemment, dans un soucis de standardisation, il apparaît tout de même envisageable de concevoir un dispositif de maintien qui soit compatible avec plusieurs longueurs de balais.

On peut également remarquer que la notion de surface d'appui désigne ici aussi bien une surface concave unique s'étendant de manière continue, qu'une pluralité de zones de contact beaucoup plus ponctuelles et disposés suivant une trajectoire curviligne ; ces diverses zones de contact pouvant être de tailles variables et plus ou moins régulièrement espacées.

Il est par ailleurs important de souligner que la partie inférieure de la structure flexible, qui est vouée à coopérer avec chaque surface d'appui concave, concerne l'ensemble des surfaces de contact qui s'étendent de manière sensiblement orthogonale au plan du balai et qui sont orientées dans la même direction que la lame d'essuyage. Cet ensemble de surfaces de contact correspond en fait à la face de la structure flexible, qui est naturellement concave lorsque le balai est au repos.

Il est en outre bon de préciser que les moyens de verrouillage peuvent être de tout type connu, sous réserve bien évidement qu'ils soient à même d'assurer une fonction de blocage réversible. Cela signifie entre autres qu'ils peuvent faire partie intégrante du dispositif de maintien, ou être constitués par une ou plusieurs pièces rapportées à même d'être montées amovibles ou solidarisées fixement sur ledit dispositif de maintien.

Enfin, il est entendu que l'invention est applicable à tout type de balai d'essuie-glace, mais de préférence au balai plat en raison de leur important galbe naturel.

La présente invention concerne également les caractéristiques qui ressortiront au cours de la description qui va suivre, et qui devront être considérées isolément ou selon toutes leurs combinaisons techniques possibles.

Cette description, donnée à titre d'exemple non limitatif, est destinée à mieux faire comprendre en quoi consiste l'invention et comment elle peut être réalisée. Elle est par ailleurs donnée en référence aux dessins annexés dans lesquels:

La figure 1 illustre un balai d'essuie-glace plat en début phase de montage sur un dispositif de maintien conforme à l'invention.

La figure 2 est une vue similaire à la figure 1, mais en fin de phase de montage.

La figure 3 fait apparaître en perspective de dessus le dispositif de maintien visible aux figures 1 et 2.

La figure 4 montre le dispositif de maintien en coupe transversale suivant la ligne AA'.

La figure 5 constitue également une coupe transversale, mais au niveau de la ligne BB'.

La figure 6 représente elle aussi une vue en coupe, mais suivant la ligne CC' en ce qui la concerne.

La figure 7 est une perspective de dessus illustrant le balai d'essuie-glace plat et le dispositif de maintien une fois assemblés.

La figure 8 montre un dispositif de maintien qui est conforme à un second mode de réalisation de l'invention.

Pour des raisons de clarté, les mêmes éléments ont été désignés par des références identiques. De même, seuls les éléments essentiels pour la compréhension de l'invention ont été représentés, et ceci sans respect de l'échelle et de manière schématique.

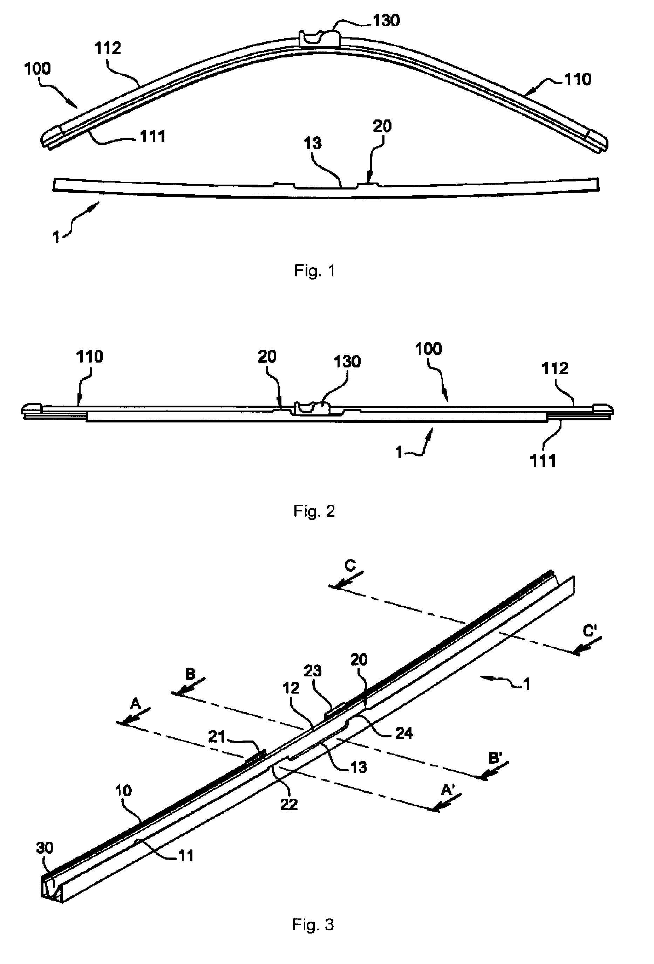

La figure 1 illustre un balai d'essuie-glace plat 100 qui est plus particulièrement destiné à équiper un véhicule automobile, mais qui dans le cas présent est voué à être couplé à un dispositif de maintien 1 chargé d'en réduire l'encombrement. Sur cette première représentation, on remarque d'ailleurs très bien la forme naturellement galbée du balai plat 100.

De manière tout à fait classique, le balai plat 100 est principalement composé d'une lame d'essuyage 110 qui intègre à la fois une lèvre 111 et un spolier 112, d'une structure flexible 120 qui assure le support de ladite lame 110, ainsi que d'un connecteur 130 qui est solidaire de ladite structure flexible 120 et qui autorise le montage dudit balai 100 à l'extrémité d'un bras d'actionnement d'un mécanisme d'entraînement associé.

Dans ce mode particulier de réalisation, choisi uniquement à titre d'exemple, la structure flexible 120 est constituée par une monovertèbre métallique qui est intégrée longitudinalement à l'intérieur de la lame d'essuyage 110. Cette monovertèbre présente un profil courbé qui confère une forme incurvée à la lame d'essuyage 110 (figure 1).

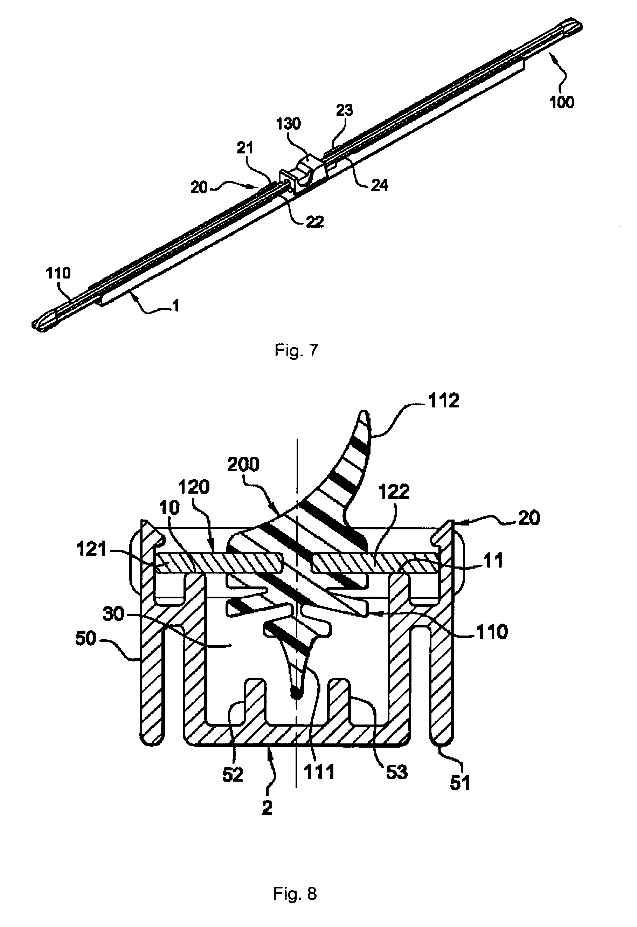

Ainsi donc, la fonction du dispositif de maintien 1 est de maintenir sensiblement à plat la lame d'essuyage 110 (figures 2 et 7). Pour cela, et conformément à l'objet de la présente invention, le dispositif de maintien 1 est tout d'abord doté de deux surfaces d'appui concaves 10, 11 qui sont à même de coopérer par contact avec la partie inférieure de la structure flexible 120 du balai 100. Mais il est également pourvu de moyens de verrouillage 20 qui sont quant à eux en mesure de plaquer au moins ponctuellement la structure flexible 120 contre chaque surface d'appui concave 10, 11.

Il est à noter que ce dispositif de maintien 1 à deux surfaces d'appui concaves 10, 11 constitue un mode de réalisation actuellement préféré de l'invention, en raison de la stabilité mécanique qu'il procure. L'ensemble est en effet agencé de manière à ce que les deux surfaces d'appui 10, 11 en question coopèrent par contact avec respectivement deux portions de la partie inférieure de la structure flexible 120, qui sont situées de part et d'autre de la lame d'essuyage 110.

Ceci étant, il apparaît tout à fait envisageable de concevoir un dispositif de maintien 1 ne mettant en oeuvre qu'une seule surface d'appui concave 10, 11. Les moyens de verrouillage 20 devront simplement être adaptés pour compenser la diminution de surface support, et garantir malgré tout une parfaite immobilisation de la structure flexible 120.

De manière particulièrement avantageuse, chaque surface d'appui concave 10, 11 s'étend sur sensiblement toute la longueur du dispositif de maintien 1.

Cette caractéristique permet d'optimiser le maintien du balai 100 sur le dispositif de maintien 1, indépendamment de l'action des moyens de verrouillage 20. On comprend effectivement très bien que plus le soutien de la lame d'essuyage 110 sera réalisé sur une grande longueur, plus la stabilité de l'ensemble sera importante.

De préférence, chaque surface d'appui concave 10, 11 s'étend de manière continue sur sensiblement toute la longueur du dispositif de maintien 1.

On sait qu'une surface d'appui ne doit pas obligatoirement être continue, et qu'elle peut être constituée par une pluralité de zones de contact disposés de manière adéquate. Toutefois, une surface continue unique offre l'avantage d'être à la fois beaucoup plus facile à réaliser du fait que les contraintes dimensionnelles sont moins nombreuses, et d'une meilleure efficacité en terme de maintien puisque la surface de contact est alors maximisée.

Conformément à une autre caractéristique avantageuse de l'invention, la courbure de chaque surface d'appui concave 10, 11 est régulière.

Cette caractéristique permet à la structure flexible 120 d'épouser au mieux chaque surface d'appui concave 10, 11, ce qui contribue là encore à améliorer la fonction de maintien.

Selon une particularité de l'invention, visible aux figures 1 et 3, le dispositif de maintien 1 présente au repos une forme cintrée (figure 1) dont la courbure est sensiblement parallèle à celle de chaque surface d'appui 10, 11.

Une telle spécificité permet de ne pas accroître l'encombrement du dispositif de maintien 1 lorsque que l'on cherche à réduire celui de la lame d'essuyage 110. On sait en effet que le fléchissement d'une forme droite a naturellement tendance à augmenter son volume, alors que l'on obtient le résultat inverse avec une forme cintrée pour peu que la courbure originelle soit opposée à la déformation.

Selon une autre particularité de l'invention, observable cette fois uniquement à la figure 3, le dispositif de maintien 1 comprend un logement longitudinal 30 (figures 3 à 6) qui est ouvert latéralement afin de pouvoir recevoir la lame d'essuyage 110.

De manière particulièrement avantageuse, les deux surfaces d'appui 10, 11 sont respectivement ménagées au niveau des deux bords délimitant longitudinalement l'ouverture du logement 30.

Dans cet exemple de réalisation, le dispositif de maintien 1 est réalisé en matière plastique, c'est-à-dire dans un matériau peu onéreux qui convient bien au caractère jetable de ce type de pièce.

Selon une autre particularité de l'invention, les moyens de verrouillage 20 sont à même de plaquer la structure flexible 120 sensiblement au milieu de chaque surface d'appui concave 10, 11.

On comprend bien que lorsqu'il convient de rapprocher deux éléments cintrés dont les courbures concaves sont en vis-à-vis, la solution optimale pour solidariser l'ensemble consiste à réaliser un blocage en partie centrale étant donné que c'est la zone où les contraintes vont être les plus fortes. L'objectif est de maximiser l'efficacité des moyens de verrouillage 20 afin de minimiser leur présence.

Ainsi qu'on peut le voir à la figure 3, dans cet exemple de réalisation, les moyens de verrouillage 20 comportent deux paires de clips élastiquement déformables 21, 22 ; 23, 24 qui sont destinées à prendre place de part et d'autre du connecteur 130 ; les deux clips 21, 22 ; 23, 24 de chaque paire étant respectivement ménagés sur chaque bord longitudinal du dispositif de maintien 1. L'ensemble est par ailleurs agencé de manière à ce que les deux clips 21, 22 ; 23, 24 de chaque paire soit en mesure de coopérer par blocage avec deux portions transversalement opposées de la partie supérieure de la structure flexible 120.

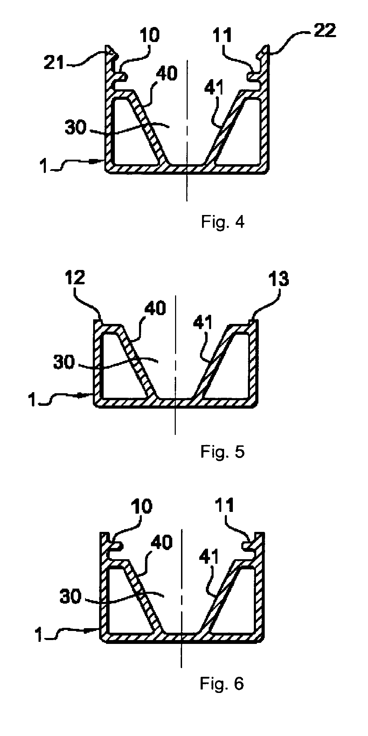

La section AA' représentée à la figure 4 permet de bien visualiser la forme classique des clips de verrouillage 21, 22, ainsi que leur positionnement au droit des surfaces d'appui concaves 10, 11. Le principe de fixation réversible par clipage étant parfaitement connu de l'état de la technique, il ne sera pas décrit davantage ici.

La coupe transversale BB' de la figure 5 met en évidence le fait que le dispositif de maintien 1 présente une hauteur moindre en partie centrale. Concrètement, les bords délimitant longitudinalement l'ouverture transversale du logement 30, présentent des découpes 12, 13 qui sont destinées au positionnement du connecteur 130 (figures 2 et 7).

La section CC' de la figure 6 est quant à elle représentative de la plus grande partie du dispositif de maintien 1, et montre bien que les surfaces d'appui concaves 10, 11 s'étendent sur toute la longueur du profilé.

Selon une autre particularité de l'invention, clairement visible sur les figures 4 à 6, le dispositif de maintien 1 est doté de deux parois longitudinales de renfort 40, 41 qui s'étendent directement à l'intérieur du logement 30. Bien entendu, il pourrait également être pourvu d'une ou plusieurs parois de renfort externes en complément ou comme alternative.

La figure 8 illustre pour sa part un dispositif de maintien 2 qui est conforme à un second mode de réalisation de l'invention. Celui-ci se distingue du premier précédemment décrit, tout d'abord par le fait qu'il est conformé pour être couplé à un balai d'essuie-glace plat 200 à double vertèbres.

On observe en effet clairement sur cette nouvelle coupe transversale, que le structure flexible 120 du balai plat 200 est constituée par deux languettes élastiquement déformable 121, 122, formant vertèbres. Ces dernières sont par ailleurs insérées latéralement de chaque côté et sur toute la longueur de la lame d'essuyage 110. Ce type de balai plat 200 étant lui aussi parfaitement connu de l'état de la technique, il ne sera lui non plus pas décrit davantage.

On remarque simplement que ce sont les languettes 121, 122 elles-mêmes qui sont directement au contact des surfaces d'appui concaves 10, 11, et qui en outre coopèrent par blocage avec les moyens de verrouillage 20.

Une autre différence par rapport au premier mode de réalisation est que le dispositif de maintien 2 comprend ici quatre nervures longitudinales de rigidification 50, 51, 52, 53. Dans ce second mode particulier de réalisation, choisi là encore uniquement à titre d'exemple, on distingue deux nervures de rigidification externes 50, 51, ainsi que deux nervures de rigidification internes 52, 53.

Bien entendu, l'invention concerne plus généralement tout emballage pour balai d'essuie-glace 100, 200, comportant au moins un dispositif de maintien 1, 2 tel que précédemment décrit.

## Revendications

1. Ensemble comprenant un dispositif de maintien (1, 2) et un balai d'essuie-glace (100, 200) comprenant une lame d'essuyage (110) supportée par une structure flexible (120), qui présente une courbure naturelle ledit dispositif (1 , 2) étant destiné à maintenir la lame d'essuyage (110) dans ne forme sensiblement rectiligne, **caractérisé en ce que** le dispositif comporte au moins une surface d'appui concave (10, 11) dans le sens opposé à la courbure de la structure flexible s'étendant longitudinalement et coopérant par contact avec la partie inférieure de la structure flexible (120), ainsi que des moyens de verrouillage (20) plaquant au moins ponctuellement la structure flexible (120) contre chaque surface d'appui concave (10, 11) de sorte à réaliser, lors de la mise en place du balai d'essuie-glace, un redressement excessif de la lame d'essuyage.

2. Ensemble selon la revendication 1, **caractérisé en ce que** le dispositif de maintien (1, 2) comporte deux surfaces d'appui concaves (10, 11) coopérant par contact avec respectivement deux portions de la structure flexible (120), situées de part et d'autre de la lame d'essuyage (110).

3. Ensemble selon l'une des revendications 1 ou 2, **caractérisé en ce que** chaque surface d'appui concave (10, 11) s'étend sur sensiblement toute la longueur dudit dispositif de maintien (1).

4. Ensemble (1, 2) selon l'une quelconque des revendications 1 à 3, **caractérisé en ce que** chaque surface d'appui concave (10, 11) s'étend de manière continue sur sensiblement toute la longueur dudit dispositif de maintien (1).

5. Ensemble selon l'une quelconque des revendications 1 à 4, **caractérisé en ce que** la courbure de chaque surface d'appui concave (10, 11) est régulière.

6. Ensemble selon l'une quelconque des revendications 1 à 5, **caractérisé en ce que** le dispositif de maintien (1, 2) présente une forme cintrée dont la courbure est sensiblement parallèle à celle de chaque surface d'appui (10, 11).

7. Ensemble selon l'une quelconque des revendications 1 à 6, **caractérisé en ce que** le dispositif de maintien (1, 2) comporte un logement longitudinal (30) qui est ouvert latéralement et qui est apte à recevoir la lame d'essuyage (110).

8. Ensemble selon la revendication 7, **caractérisé en ce que** chaque surface d'appui (10, 11) est ménagée le long d'un des deux bords délimitant longitudinalement l'ouverture du logement (30).

9. Ensemble selon l'une quelconque des revendications 1 à 8, **caractérisé en ce que** les moyens de verrouillage (20) sont aptes à plaquer la structure flexible (120) sensiblement au milieu de chaque surface d'appui concave (10, 11).

10. Ensemble selon l'une quelconque des revendications 1 à 9, **caractérisé en ce que** les moyens de verrouillage (20) comportent au moins deux clips élastiquement déformables (21, 22 ; 23, 24) qui sont respectivement aptes à coopérer par blocage avec deux portions transversalement opposées de la partie supérieure de la structure flexible (120).

11. Ensemble selon l'une quelconque des revendications 1 à 10, **caractérisé en ce que** le dispositif de maintien (1) comporte au moins une paroi longitudinale de renfort (40, 41).

12. Ensemble selon l'une quelconque des revendications 1 à 11, **caractérisé en ce que** le dispositif de maintien (2) comporte au moins une nervure longitudinale de rigidification (50, 51, 52, 53).

13. Ensemble selon l'une quelconque des revendications 1 à 12, **caractérisé en ce que** le dispositif de maintien (1, 2) est réalisé en matière plastique.

14. Emballage pour balai d'essuie-glace, **caractérisé en ce qu'**il comporte au moins un ensemble selon l'une quelconque des revendications précédentes.

15. Utilisation d'un dispositif de maintien (1, 2) pour un balai d'essuie-glace (100, 200) comprenant une lame d'essuyage (110) supportée par une structure flexible (120) qui présente une coubure naturelle pour réaliser, lors de la mise en place du balai d'essuie-glace, un redressement excessif de la lame d'essuyage, ledit dispositif (1, 2) étant destiné à maintenir la lame d'essuyage (110) dans une forme sensiblement rectiligne, **caractérisé en ce que** le dispositif comporte au moins une surface d'appui concave (10, 11) dans le sens opposé à la coubure de la structure flexible s'étendant longitudinalement, apte à coopérer par contact avec la partie inférieure de la structure flexible (120), ainsi que des moyens de verrouillage (20) aptes à plaquer au moins ponctuellement la structure flexible (120) contre chaque surface d'appui concave (10, 11).

## Claims

1. Assembly comprising a retaining device (1, 2) and a windshield-wiper (100, 200) comprising a wiper blade (110) supported by a flexible structure (120) that has a natural curvature, said device (1, 2) being designed to retain the wiper blade (110) in a substantially rectilinear shape, **characterized in that** the device includes at least one concave bearing surface (10, 11) in the opposite sense to the curvature of the flexible structure extending longitudinally and co-operating by contact with the lower part of the flexible structure (120), and locking means (20) pressing the flexible structure (120) at least at a point against each concave bearing surface (10, 11) so as to produce, when the windshield-wiper is fitted, excessive straightening of the wiper blade.

2. Assembly according to Claim 1, **characterized in that** the retaining device (1, 2) includes two concave bearing surfaces (10, 11) co-operating by contact with respective portions of the flexible structure (120) situated on either side of the wiper blade (110).

3. Assembly according to Claim 1 or 2, **characterized in that** each concave bearing surface (10, 11) extends over substantially all of the length of said retaining device (1).

4. Assembly (1, 2) according to any one of Claims 1 to 3, **characterized in that** each concave bearing surface (10, 11) extends continuously over substantially all of the length of said retaining device (1).

5. Assembly according to any one of Claims 1 to 4, **characterized in that** the curvature of each concave bearing surface (10, 11) is regular.

6. Assembly according to any one of Claims 1 to 5, **characterized in that** the retaining device (1, 2) has a curved shape the curvature whereof is substantially parallel to that of each bearing surface (10, 11).

7. Assembly according to any one of Claims 1 to 6, **characterized in that** the retaining device (1, 2) includes a longitudinal housing (30) that is open laterally and is adapted to receive the wiper blade (110).

8. Assembly according to Claim 7, **characterized in that** each bearing surface (10, 11) is provided along one of the two edges delimiting the opening of the housing (30) longitudinally.

9. Assembly according to any one of Claims 1 to 8, **characterized in that** the locking means (20) are adapted to press the flexible structure (120) substantially in the middle of each concave bearing surface (10, 11).

10. Assembly according to any one of Claims 1 to 9, **characterized in that** the locking means (20) include at least two elastically deformable clips (21, 22; 23, 24) that are respectively adapted to co-operate blocking fashion with two transversely opposite portions of the upper part of the flexible structure (120).

11. Assembly according to any one of Claims 1 to 10, **characterized in that** the retaining device (1) includes at least one longitudinal reinforcing wall (40, 41).

12. Assembly according to any one of Claims 1 to 11, **characterized in that** the retaining device (2) includes at least one longitudinal stiffener rib (50, 51, 52, 53).

13. Assembly according to any one of Claims 1 to 12, **characterized in that** the retaining device (1, 2) is made of plastic material.

14. Packaging for windshield wipers **characterized in** it includes an assembly according to any one of the preceding claims.

15. Use of a retaining device (1, 2) for a windshield-wiper (100, 200) comprising a wiper blade (110) supported by a flexible structure (120) that has a natural curvature so as to produce, when the windshield-wiper is fitted, excessive straightening of the wiper blade, said device (1, 2) being designed to retain the wiper blade (110) in a substantially rectilinear shape, **characterized in that** the device includes at least one concave bearing surface (10, 11) in the opposite sense to the curvature of the flexible structure extending longitudinally and co-operating by contact with the lower part of the flexible structure (120) and locking means (20) adapted to press the flexible structure (120) at least at a point against each concave bearing surface (10, 11).

## Patentansprüche

1. Einheit, die eine Haltevorrichtung (1, 2) und einen Scheibenwischer (100, 200) enthält, der ein von einer eine natürliche Krümmung aufweisenden flexiblen Struktur (120) getragenes Wischerblatt (110) enthält, wobei die Vorrichtung (1, 2) dazu bestimmt ist, das Wischerblatt (110) in einer im Wesentlichen geradlinigen Form zu halten, **dadurch gekennzeichnet, dass** die Vorrichtung mindestens eine konkave Auflagefläche (10, 11) in der zur Krümmung der flexiblen Struktur entgegengesetzten Richtung, die sich in Längsrichtung erstreckt und durch Kontakt mit dem unteren Bereich der flexiblen Struktur (120) zusammenwirkt, sowie Verriegelungseinrichtungen (20) aufweist, die die flexible Struktur (120) zumindest punktweise gegen jede konkave Auflagefläche (10, 11) drücken, um beim Einsetzen des Scheibenwischers ein übermäßiges Aufrichten des Wischerblatts zu realisieren.

2. Einheit nach Anspruch 1, **dadurch gekennzeichnet, dass** die Haltevorrichtung (1, 2) zwei konkave Auflageflächen (10, 11) aufweist, die durch Kontakt mit zwei Teile der flexiblen Struktur (120) zusammenwirken, die sich zu beiden Seiten des Wischerblatts (110) befinden.

3. Einheit nach einem der Ansprüche 1 oder 2, **dadurch gekennzeichnet, dass** jede konkave Auflagefläche (10, 11) sich über im Wesentlichen die ganze Länge der Haltevorrichtung (1) erstreckt.

4. Einheit (1, 2) nach einem der Ansprüche 1 bis 3, **dadurch gekennzeichnet, dass** jede konkave Auflagefläche (10, 11) sich durchgehend über im Wesentlichen die ganze Länge der Haltevorrichtung (1) erstreckt.

5. Einheit nach einem der Ansprüche 1 bis 4, **dadurch gekennzeichnet, dass** die Krümmung jeder konkaven Auflagefläche (10, 11) gleichmäßig ist.

6. Einheit nach einem der Ansprüche 1 bis 5, **dadurch gekennzeichnet, dass** die Haltevorrichtung (1, 2) eine gebogene Form aufweist, deren Krümmung im Wesentlichen parallel zu derjenigen jeder Auflagefläche (10, 11) ist.

7. Einheit nach einem der Ansprüche 1 bis 6, **dadurch gekennzeichnet, dass** die Haltevorrichtung (1, 2) eine Längsaufnahme (30) aufweist, die seitlich offen ist und das Wischerblatt (110) aufnehmen kann.

8. Einheit nach Anspruch 7, **dadurch gekennzeichnet, dass** jede Auflagefläche (10, 11) entlang eines der zwei Ränder angeordnet ist, die die Öffnung der Aufnahme (30) in Längsrichtung begrenzen.

9. Einheit nach einem der Ansprüche 1 bis 8, **dadurch gekennzeichnet, dass** die Verriegelungseinrichtungen (20) die flexible Struktur (120) im Wesentlichen in der Mitte jeder konkaven Auflagefläche (10, 11) andrücken können.

10. Einheit nach einem der Ansprüche 1 bis 9, **dadurch gekennzeichnet, dass** die Verriegelungseinrichtungen (20) mindestens zwei elastisch verformbare Clips (21, 22; 23, 24) aufweisen, die jeweils durch Blockieren mit zwei in Querrichtung einander gegenüberliegenden Teilen des oberen Bereichs der flexiblen Struktur (120) zusammenwirken können.

11. Einheit nach einem der Ansprüche 1 bis 10, **dadurch gekennzeichnet, dass** die Haltevorrichtung (1) mindestens eine Verstärkungslängswand (40, 41) aufweist.

12. Einheit nach einem der Ansprüche 1 bis 11, **dadurch gekennzeichnet, dass** die Haltevorrichtung (2) mindestens eine Versteifungslängsrippe (50, 51, 52, 53) aufweist.

13. Einheit nach einem der Ansprüche 1 bis 12, **dadurch gekennzeichnet, dass** die Haltevorrichtung (1, 2) aus Kunststoff hergestellt ist.

14. Verpackung für einen Scheibenwischer, **dadurch gekennzeichnet, dass** sie mindestens eine Einheit nach einem der vorhergehenden Ansprüche aufweist.

15. Verwendung einer Haltevorrichtung (1, 2) für einen Scheibenwischer (100, 200), der ein Wischerblatt (110) enthält, das von einer flexiblen Struktur (120) getragen wird, die eine natürliche Krümmung aufweist, um beim Einsetzen des Scheibenwischers eine übermäßige Aufrichtung des Wischerblatts zu realisieren, wobei die Vorrichtung (1, 2) dazu bestimmt ist, das Wischerblatt (110) in einer im Wesentlichen geradlinigen Form hat halten, **dadurch gekennzeichnet, dass** die Vorrichtung mindestens eine konkave Auflagefläche (10, 11) in der der Krümmung der flexiblen Struktur entgegengesetzten Richtung, die sich in Längsrichtung erstreckt und durch Kontakt mit dem unteren Bereich der flexiblen Struktur (120) zusammenwirken kann, sowie Verriegelungseinrichtungen (20) aufweist, die die flexible Struktur (120) zumindest punktweise gegen jede konkave Auflagefläche (10, 11) drücken können.
